# EUROPÄISCHE PATENTSCHRIFT

(11) **EP 2 331 931 B1**
(45) Veröffentlichungstag und Bekanntmachung des Hinweises auf die Patenterteilung: **29.03.2017**
(21) Anmeldenummer: 09775896.5
(22) Anmeldetag: 20.06.2009
(51) Int. Cl.: G01N 3/06, G01N 3/08, G01N 3/32, G01N 3/34, G01N 3/36, G01N 3/38

(54) **VORRICHTUNG ZUR DURCHFÜHRUNG VON BAUTEIL- UND WERKSTOFFPRÜFUNGEN AN PROBEN**
APPARATUS FOR CONDUCTING COMPONENT AND MATERIAL TESTS ON SAMPLES
DISPOSITIF POUR LA RÉALISATION D ESSAIS DE COMPOSANTS ET DE MATÉRIAUX SUR DES ÉCHANTILLONS

(30) Priorität: 08.10.2008 DE 102008050465
(43) Veröffentlichungstag der Anmeldung: 15.06.2011
(73) Patentinhaber: Zwick GmbH & Co. Kg, 89079 Ulm (DE)
(72) Erfinder: STELZER-RONCOLETTA, Achim, 89601 Schelklingen (DE); PFINDER, Manfred, 89231 Neu Ulm (DE)
(74) Vertreter: Cremer & Cremer
(86) Internationale Anmeldenummer: PCT/DE2009/000853
(87) Internationale Veröffentlichungsnummer: WO 2010/040326

(56) Entgegenhaltungen:
- EP-A- 1 126 269
- WO-A-2004/015398
- CH-A- 532 782
- DE-A1- 2 027 306
- DE-A1- 2 239 554
- DE-A1- 4 309 530
- DE-A1- 19 706 744
- FR-A- 2 792 412
- GB-A- 2 029 018
- GB-A- 2 067 769
- JP-A- S62 203 043
- US-A- 4 448 079
- US-B1- 6 539 809
- ANONYMOUS: 'Kraftaufnehmer - Wikipedia', [Online] 08 Dezember 2015, XP055257874 Gefunden im Internet: <URL:https://de.wikipedia.org/wiki/Kraftauf nehmer> [gefunden am 2016-03-14]

## Beschreibung

Die Erfindung betrifft eine Vorrichtung zur Durchführung von Bauteil- und Werkstoffprüfungen an Proben, insbesondere von Druck- und Zugversuchen an Federn und elastischen Bauteilen, Baugruppen und Werkstoffproben, mit zwei sich gegenüberstehend angeordneten Probenaufnahmen, zwischen denen eine Kraft zur Belastung der dazwischen angeordneten Probe erzeugbar ist, wobei die eine Probenaufnahme fest an einem Grundrahmen und die andere Probenaufnahme an einem verfahrbaren Stellelement angeordnet ist, ferner mit einem den Verfahrweg der Probenaufnahme erfassenden Wegaufnehmer sowie einen die auf die Probe aufgebrachte Kraft erfassenden Kraftaufnehmer.

Derartige Vorrichtungen sind in unterschiedlichen Ausführungsformen aus der Praxis bekannt, wobei der Kraftaufnehmer üblicherweise an der festen Probenaufnahme, also am Grundrahmen angeordnet ist. Dadurch muss nicht nur das Eigengewicht der Probe bei der Auswertung der Bemessung berücksichtigt, in der Regel wegtariert werden; hinzu kommt, dass die Eigenverformung des Versuchsaufbaus, insbesondere die mechanische Verformung des Kraftaufnehmers unberücksichtigt bleibt. Bei hochwertigeren, insbesondere motorisch betriebenen Prüfmaschine wird die Eigenverformung des Versuchsaufbaus elektronisch korrigiert, was jedoch einen zusätzlichen Aufwand bedeutet.

Andere Anordnungen zur Kraft bzw. Wegbestimmung gehen z. B. aus der Offenlegungsschrift DE 43 09 530 A1 (Patentinhaberin: Netzsch-Gerätebau GmbH; Anmeldetag: 24.03.1993) hervor. Darin erfolgt die dynamisch-mechanische Analyse von Probenkörpern mit einer Krafterzeugungseinrichtung. Die Vorrichtung hat einen Stempel zum Übertragen einer Kraft von der Krafterzeugungseinrichtung auf den Probenkörper und einen Wegaufnehmer, der einen Biegearm mit einem Dehnungsmesser aufweist. Die Dehnung ist ein Maß für die Stempelbewegung. Die Kraftfunktion ergibt sich hierbei aus elektrischen Daten, mit denen ein Solenoid zum Antrieb des Stempels über eine Spule angesteuert wird. Die Piezotechnik kommt gemäß der DE 197 06 744 A1 (Patentinhaberin: Dunlop GmbH; Anmeldetag 20.02.1997) zur Messung viskos-elastischer Eigenschaften an Elastomeren zum Einsatz, wobei ein Aktuator zwischen Kraftaufnehmer und Messprobe angeordnet ist.

Weiterhin beschreibt die DE 22 39 554 A1 (Anmelderin: ZWICK & Co KG.; Anmeldetag: 11.08.1972) eine Universalprüfmaschine mit einem Maschinenrahmen aus einem Querhaupt und einem Sockel mit verbindenden Säulen und mit im Sockel und im Querhaupt gelagerten Spindeln zum Antrieb einer längs der Säulen verstellbaren Traverse. Die Säulen und die Spindeln sind über das Querhaupt und den Sockel gegeneinander verspannt und hierdurch, auch bei unbelasteter Traverse, sind die Säulen auf Druck, die Spindeln auf Zug vorgespannt, woraus sich eine besondere Steifigkeit der Prüfmaschine ergibt.

Weitere Beispiele für verschiedene Aspekte von Materialprüfungen offenbaren die folgenden Dokumente:
Eine manuell betriebene Vorrichtung zum Prüfen viskos-elastischer Eigenschaften ist aus der GB 2 067 769 A (Patentinhaberin: BERGOUGNAN BENELUX; Prioritätstag: 30.11.1979) bekannt; ein Verfahren und eine Anordnung zur Ermittlung der Risszähigkeit von Stoffen ist Gegenstand der WO 2004/015 398 A1 (Anmelder: MONASH UNIVERSITY/ BATCHELOR Warren; Prioritätstag: 08.08.2002); für Reißfestigkeitsprüfungen von textilen Prüflingen wird in der CH 532 782 A (Patentinhaberin: ZELLWEGER USTER AG, CH; Anmeldetag: 17.06.1971) eine Anordnung vorgeschlagen; in der FR 2 792 412 A1 (Patentinhaberin: FRAMATOME SA; Anmeldetag: 14.04.1999) ist eine Messvorrichtung zur Durchführung von mechanischen Prüfungen an Proben in einem Autoklav beschrieben; Belastungsuntersuchungen an Proben unter Korrosionseinfluss erläutert die DE 20 27 306 A1 (Anmelderin: Commissariat ä l'Energie Atomique; Prioritätstag: 06.06.1969); dynamischresonatorische Aspekte bei einer Prüfung elastischer Materialien gehen aus der GB 2 029 018 A (Anmelderin: L'OREAL; Prioritätstag: 31.08.1978) hervor.

Weiterhin beschreibt die EP 1 126 269 A1 (Patentinhaberin: METTLER-TOLEDO GmbH, CH; Anmeldetag 03.02.2000) eine Vorrichtung zur dynamisch-mechanischen Analyse von Proben in einem Bereich von Anregungsfrequenzen, mit elektromechanischen Wandlern zur periodischen Einleitung einer mechanischen Kraft. Hierbei werden typischerweise eine Scherkraft über ein Koppelglied und zueinander passende, mehrteilige Zylinder/Scheibenformen auf eine Probe ausgeübt. Eine gute Messgenauigkeit wird durch Justierung der Probe in Bezug auf einen linearen Kraftübertragungsweg mit zwei orthogonal zur Probenachse laufenden Schlitten erzielt. Eine Messung von relativen Auslenkungen von Halteteilen der Probe erfolgt mit einem Wegaufnehmer. Dabei wird ein Weg bspw. über eine Erstreckung in einem Spulenkern quasi berührungslos aufgenommen. Ein Kraftsensor ist an der Justiervorrichtung angekoppelt. Hierbei können somit Spiele zwischen den Halteteilen sowie Momente der Halteteile und des Wegaufnehmers und eine durch den Wegaufnehmer gegebene Beabstandung eines Kraftsensors zur Probe die Messungen an einer Probe beeinflussen.

Ferner wird in der US 4448079 A eine Messeinrichtung vorgestellt, die zur Bestimmung der auf einen Prüfling einwirkenden Kraft und der daraus resultierenden Dimensionsänderung des Prüflings vorgesehen ist. Die Einrichtung misst unterschiedliche Parameter des Prüflings, indem unterschiedliche Messköpfe verwendet werden. Dabei soll die lineare Verformungsstrecke und die hierbei auf den Prüfling einwirkende Kraft gemessen werden, um eine Kennlinie der Kraft/Dimensionsänderung zu ermitteln, die durch eine Auswerteeinheit mit vordefinierten Bezugswerten verglichen werden kann.

Aus der US 6539809 B1 ist eine Testvorrichtung bekannt, die zur Durchführung einer Belastungs- und Dehnungsanalyse von Testobjekten dient. Die Testvorrichtung soll geeignet sein, einen breiten Bereich von Tests durchzuführen, welche ein Anlegen einer Kraft und ein Messen einer angelegten Kraft und eine Ablenkung mit großer Präzision ermöglichen. Hierfür weist die Messvorrichtung eine Basis auf, auf deren Oberfläche eine Testprobe positioniert werden kann. Mit der Basis ist ein nach oben abragender Support starr verbunden. In einem Abstand zur Basis ist ein Träger am Support fest angeordnet. Der Support weist eine Linearführung mit einem bewegbaren Arm auf, der parallel zur Oberfläche der Basis senkrecht vom Support abragt. Weiter trägt der Träger eine Verstellschraubenspindel, die zum Antreiben der beweglichen Teile der Testvorrichtung mittels eines Motors vorgesehen ist. Die Verstellschraubenspindel ist im Wesentlichen senkrecht zur Basis ausgerichtet. Der bewegliche Arm ist dabei an der Verstellschraubenspindel festgelegt und parallel zur Verstellschraubenspindel beweglich. Der Arm trägt an einem Ende eine Messdose auf, die ein Abtastende mit einem Arbeitskopf und einer Skala aufweist, wobei das Abtastende vom Arm beabstandet ist. Arbeitskopf und Skala können gemeinsam mit dem Arm bewegt werden, um eine Kraft auf die Testprobe auszuüben, wobei die Achse des Kraftvektors beabstandet zur Verstellschraubenspindel liegt. Die Skala erstreckt sich von der Messdose parallel zur Schraube und koaxial zur Kraft, die auf den Arbeitskopf aufgebracht wird.
Der Träger trägt an seinem Ende, das dem Support gegenüberliegt, einen Lesekopf in Form einer linearen Codiereinrichtung. Durch die Bewegung des Arms wird die Skala am Lesekopf vorbei geführt. Der Aufbau der Vorrichtung aus basiert auf beabstandeten Achsen der Verstellschraubenspindel zum Einleiten einer Kraft auf die Messprobe und der Skala der Messdose. Diese Kolinearität der linearen Skala und der aufgebrachten Kraft, dass die Lesungen der Messauslenkung unbeeinflusst sind von einer sich verändernden Senkrechtstellung zwischen Träger und Support. Allerdings begünstigt eine koaxialer Führung der Kraftachse und der Messachse einen Messfehler durch Eigenverformung der Messvorrichtung.

Derartige Testanordnungen sind mit konstruktiven Merkmalen ausgestaltet, mit denen eine Güte der Messgenauigkeit, wie sie in einer erfindungsgemäßen Anordnung angestrebt wird, nicht erreichbar ist.

Der Erfindung liegt die Aufgabe zugrunde, eine Vorrichtung der eingangs genannten Art dahingehend zu verbessern, dass Messfehler infolge der Eigenverformung der Vorrichtung und des Kraftaufnehmers nicht auftreten können und darüber hinaus die Möglichkeit geschaffen wird, statt nur einzelner Messpunkte ein Kraft-Weg-Diagramm aufnehmen zu können.

Diese Aufgabe wird nach der Erfindung dadurch gelöst, dass der Kraftaufnehmer am verfahrbaren Verstellelement angeordnet ist und der Messtaster des Wegaufnehmers mit dem beweglichen Teil des Kraftaufnehmers verbunden ist.

Der durch die Erfindung erreichte Vorteil besteht zunächst im Wesentlichen darin, dass Verformungen des Kraftaufnehmers über den Messtaster selbsttätig kompensiert werden. Da der Kraftaufnehmer am verfahrbaren Stellelement angeordnet ist, bleibt er vom Eigengewicht der Probe unbelastet, so dass auch insoweit eine Kraftnullung bzw. Tarierung entfällt.

Hierbei ist es vorteilhaft, wenn die Messachse des Wegaufnehmers und die Achse des Kraftvektors der eingeleiteten Kraft mit der zu messenden Strecke fluchten. Somit können Messfehler erster Ordnung nach Abbe nicht auftreten, da die zu messende Strecke und das Messnormal in einer Flucht liegen.

Weiter empfiehlt es sich im Rahmen der Erfindung, dass der Wegaufnehmer am Grundrahmen, also am nicht bewegten Teil der Vorrichtung angeschlossen ist.

In bevorzugter Ausführungsform der Erfindung ist vorgesehen, dass der Kraftaufnehmer einerseits der der festen Probenaufnahme zugewandten Stirnseite des Stellelements und andererseits der verfahrbaren Probenaufnahme anliegt. Dies hat sich als messtechnisch günstige Position herausgestellt.

Im Einzelnen hat es sich als vorteilhaft herausgestellt, wenn der Kraftaufnehmer in der Art einer Kraftmessdose mit einem äußeren Ringelement und einem zentralen inneren Druckelement ausgebildet ist, wobei das Ringelement der Stirnseite des Stellelements und das innere Druckelement der verfahrbaren Probenaufnahme anliegen und das Ringelement über Verformungsstege mit dem inneren Druckelement verbunden ist. Hierbei erfolgt die Kraftmessung über die Verschiebung des inneren Druckelements gegenüber dem Ringelement. Grundsätzlich kann im Rahmen der Erfindung statt eines Speichenkraftaufnehmers jedoch ebenso auch ein Balken- oder Membranaufnehmer zum Einsatz kommen.

Weiter ist es hierbei zweckmäßig, wenn in der Stirnseite des Stellelements eine Aufnahmevertiefung für das innere Druckelement vorgesehen ist, so dass hierdurch die zur Kraftmessung erforderliche Verformung des Kraftaufnehmers gewährleistet ist.

Der Wegaufnehmer ist in vorteilhafter Ausgestaltung der Erfindung von einem, koaxial an der verfahrbaren Probenaufnahme angeordneten, zylindrischen Messtaster sowie einer am Grundrahmen angeordneten Messhülse gebildet, in die der Messtaster eintaucht, wobei die Wegverschiebung zwischen Messtaster und Messhülse von einem Wegsensor erfasst wird.

Bei einer derartigen Ausgestaltung ist es weiter zweckmäßig, dass der Messtaster einen feststehenden oder justierbaren, dem inneren Druckelement auf der der Probenaufnahme abgewandten Seite anliegenden Anschlagring trägt. Dieser Anschlagring dient als mechanischer Anschlag, um eine mögliche Zerstörung des Kraftaufnehmers bei hoher Belastung zu verhindern. Dieser Anschlagring kann beispielweise auch von einer Gewindemutter, einer Kontermutter oder ähnlichem gebildet sein.

Bei einer Vorrichtung, die in Form eines Pinolen-Lastrahmens ausgebildet ist, ist es zweckmäßig, wenn das verfahrbare Stellelement von einer Pinole gebildet ist, die über eine Zahnstange über einen Handhebel oder einen motorischen Antrieb über ein Ritzel bewegt wird.

In entsprechender Weise lässt sich die Erfindung jedoch auch bei einer solchen Vorrichtung, die in Form eines Säulengestells ausgebildet ist, verwirklichen, in dem das verfahrbare Stellelement von einer Fahrtraverse gebildet ist, die auf zwei zylindrischen Säulen verfahrbar angeordnet ist, wobei die beiden Säulen durch eine obere und eine untere Festtraverse miteinander verbunden sind.

Allgemein ist bei diesen Ausführungsformen im Rahmen der Erfindung vorgesehen, dass der Wegaufnehmer und der Kraftaufnehmer fluchtend zur Mittelachse des Säulengestells angeordnet sind.

Schließlich empfiehlt es sich noch im Rahmen der Erfindung, dass der Wegaufnehmer als analoges oder digitales Wegmesssystem ausgebildet ist.

Im Folgenden wird die Erfindung an in der Zeichnung dargestellten Ausführungsbeispielen näher erläutert; es zeigen:
- **Fig. 1**: den Gegenstand nach der Erfindung bei einer als Pinolen-Lastrahmen ausgebildeten Vorrichtung,
- **Fig. 2**: eine erfindungsgemäße Vorrichtung in Form eines Säulengestells und
- **Fig. 3**: eine die Verformungskompensation verdeutlichende schematische Darstellung des Messvorgangs.

Die in der Zeichnung dargestellte Vorrichtung dient zur Durchführung von Werkstoffprüfungen an Proben, wobei sich hierfür insbesondere Druck- und Zugversuche an Federn und elastischen Bauteilen anbieten, aber auch an anderen Baugruppen und Werkstoffproben.

Zur Durchführung solcher Werkstoffprüfungen besitzt die Vorrichtung zwei sich gegenüberstehend angeordnete Probenaufnahmen 1, 2, zwischen denen eine Kraft zur Belastung der dazwischen angeordneten Proben erzeugbar ist. Dies können einerseits Druckkräfte, ebenso auch Zugkräfte sein.

Die eine Probenaufnahme 1 ist fest an einem Grundrahmen 3 angeordnet, während die andere Probenaufnahme 2 an einem verfahrbaren Stellelement 4 angeordnet ist.

Zur Ermittlung des Verfahrweges der einen Probenaufnahme 2 dient ein Wegaufnehmer 5; ferner ist ein Kraftaufnehmer 6 vorgesehen, der die auf die Probe aufgebrachte Kraft erfasst. Dabei ist der Messtaster 8 des Wegaufnehmers 5 mit dem beweglichen Teil des Kraftaufnehmers 6 verbunden.

Wie sich der Zeichnung im Einzelnen entnehmen lässt, ist der Kraftaufnehmer 6 am verfahrbaren Stellelement 4 angeordnet, während der Wegaufnehmer 5 den Verfahrweg zwischen der verfahrbaren Probenaufnahme 2 und dem Grundrahmen 3 erfasst. Die Wegmessachse fluchtet dabei mit der zu messenden Strecke. Der Kraftaufnehmer 6 ist im Einzelnen so angeordnet, dass er einerseits der der festen Probenaufnahme 1 zugewandten Stirnseite des Stellelements 4 und andererseits der verfahrbaren Probenaufnahme 2 anliegt.

Grundsätzlich bestehen für die Ausgestaltung des Kraftaufnehmers 6 unterschiedliche Möglichkeiten; zweckmäßig ist jedoch eine Ausbildung des Kraftaufnehmers 6 in der Art einer Kraftmessdose, die aus einem äußeren Ringelement 6.1 und einem zentralen inneren Druckelement 6.2 besteht. Dabei ist das Ringelement 6.1 über Verformungsstege 6.3 oder in ähnlicher Weise mit dem inneren Druckelement 6.2 verbunden, so dass eine Verschiebung des inneren Druckelements 6.2 gegenüber dem Ringelement 6.1 möglich ist und diese Verschiebung messtechnisch erfassbar ist. Das Ringelement 6.1 liegt hierbei der Stirnseite des Stellelements 4 an, während das innere Druckelement 6.2 mit der verfahrbaren Probenaufnahme 2 in Verbindung steht.

Wie sich aus den Zeichnungen weiter ersehen lässt, ist in der Stirnseite des Stellelements 4 eine Aufnahmevertiefung 7 für das innere Druckelement 6.2 vorgesehen, in die dieses bei entsprechender Belastung eintauchen kann.

Der Wegaufnehmer 5 ist von einem koaxial an der verfahrbaren Probenaufnahme angeordneten zylindrischen Messtaster 8 sowie von einer am Grundrahmen angeordneten Messhülse 9 gebildet. Der Messtaster 8 taucht hierbei in die Messhülse 9 ein, wobei die Wegverschiebung zwischen Messtaster 8 und Messhülse 9 von einem Wegsensor 10 erfasst wird.

Um Beschädigungen des Kraftaufnehmers 6 zu verhindern, trägt der Messtaster 8 einen feststehenden oder justierbaren, dem inneren Druckelement 6.2 auf der der Probenaufnahme 2 abgewandten Seite. anliegenden Anschlagring 11, der bei entsprechend hoher Belastung auf dem Boden der Aufnahmevertiefung 7 zur Anlage kommt und damit den Hub des Kraftaufnehmers 6 begrenzt.

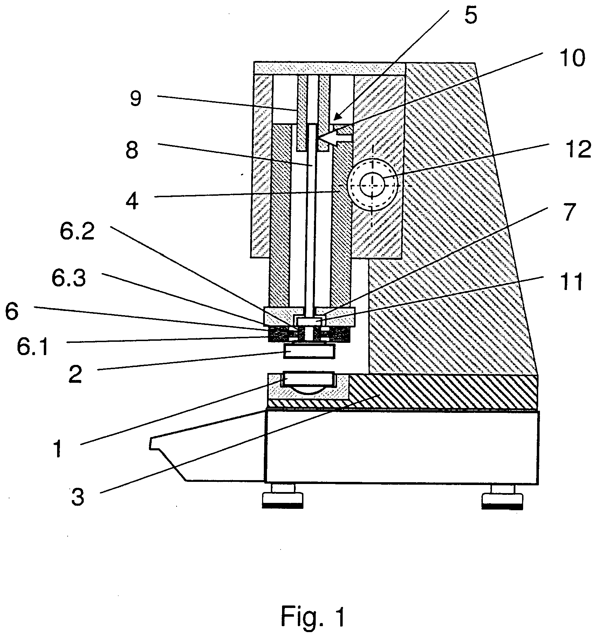

In der Ausführungsform nach **Fig. 1** ist die Vorrichtung in Form eines Pinolen-Lastrahmens ausgebildet. Das verfahrbare Stellelement 4 ist hier von einer Pinole gebildet, die in nicht näher dargestellter Weise über eine Zahnstange entweder durch einen Handhebel oder einen motorischen Antrieb über ein Ritzel 12 oder dergleichen bewegt werden kann.

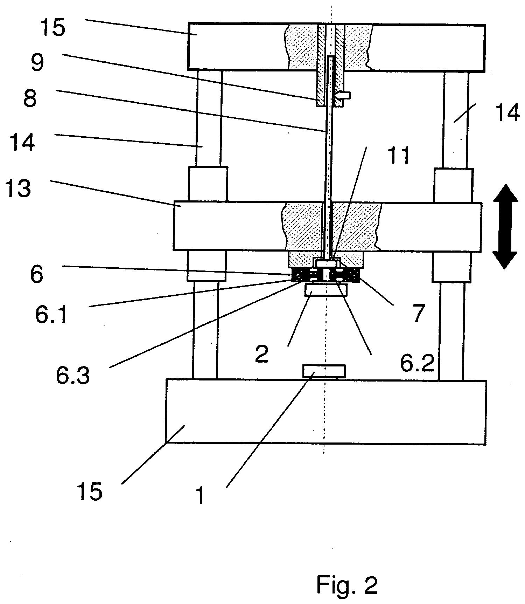

In der **Fig. 2** ist die Vorrichtung hingegen in Form eines Säulengestells ausgebildet. Hier ist das verfahrbare Stellelement 4 von einer Fahrtraverse 13 gebildet, die auf zwei zylindrischen Säulen 14 verfahrbar angeordnet ist. Die beiden Säulen 14 sind dabei in üblicher Weise durch eine obere und untere Festtraverse 15 miteinander verbunden. Die feststehende Probenaufnahme 1 ist hierbei auf der unteren Festtraverse 15 angeordnet.

Generell ist die Anordnung der Wegaufnehmer 5 und der Kraftaufnehmer 6 so gewählt, dass diese fluchtend zur Mittelachse des Säulengestells angeordnet sind.

Schließlich ist der Wegaufnehmer 5 in ebenfalls nicht näher dargestellter Weise als analoges oder digitales Wegmesssystem ausgebildet.

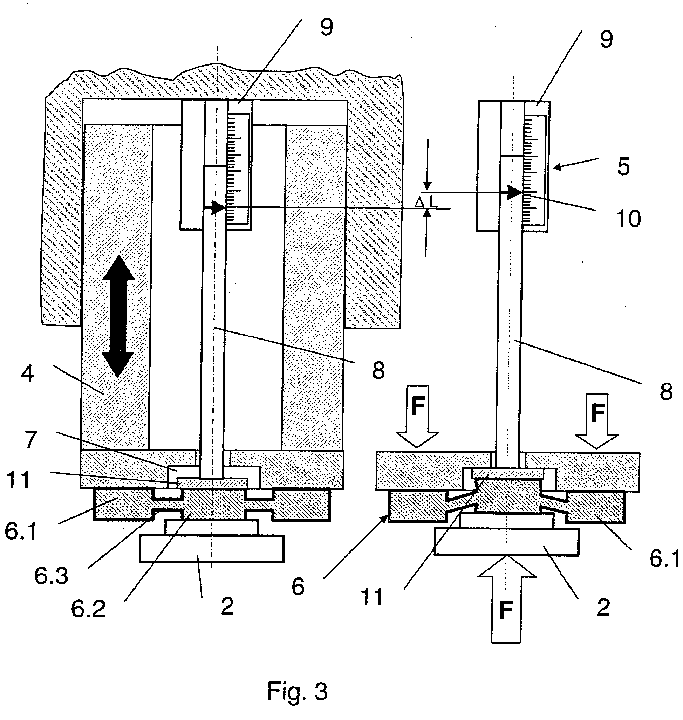

In **Fig. 3** ist in einer schematischen Darstellung die Funktion der Verformungskompensation wiedergegeben. Hieraus ist zu ersehen, dass die Einleitung einer Prüfkraft F in die auf dem Kraftaufnehmer 6 montierte, die Probenaufnahme 2 bildende Druckplatte zu einer systembedingten Verformung des Kraftaufnehmers 6 in Druck- oder Zugrichtung führt. Diese Verformung geht als Wegmessfehler in die Messung der Kraft-Hub-Kennlinie ein. Dadurch, dass das Wegmesssystem direkt auf den Kraftaufnehmer 6 aufgesetzt ist, wird dieses, je nach Beanspruchungsrichtung, um den Betrag der Eigenverformung des Kraftaufnehmers angehoben oder abgesenkt. Hierdurch erfolgt die Kompensation des Wegmessfehlers. Dies ist durch die als Delta L gekennzeichnete Weglänge in **Fig. 3** angedeutet.

## Patentansprüche

1. Vorrichtung zur Durchführung von Bauteil- und Werkstoffprüfungen an Proben mit zwei sich gegenüberstehend angeordneten Probenaufnahmen (1, 2), zwischen denen eine Kraft zur Belastung der dazwischen angeordneten Probe erzeugbar ist, wobei die eine Probenaufnahme (1) fest an einem Grundrahmen (3) und die andere Probenaufnahme (2) an einem verfahrbaren Stellelement (4) angeordnet ist, ferner mit einem den Verfahrweg der Probenaufnahme (2) erfassenden Wegaufnehmer (5) sowie einem die auf die Probe aufgebrachte Kraft erfassenden Kraftaufnehmer (6), der am verfahrbaren Stellelement (4) angeordnet ist, und mit einem Messtaster (8) des Wegaufnehmers (5), der mit dem beweglichen Teil des Kraftaufnehmers (6) verbunden ist,
**dadurch gekennzeichnet, dass**
die Messachse des Wegaufnehmers (5) und die Achse des Kraftvektors der über den Kraftaufnehmer auf die Probe eingeleiteten Kraft mit einer von dem Wegaufnehmer (5) zu messenden Strecke fluchten.

2. Vorrichtung nach Anspruch 1, **dadurch gekennzeichnet, dass** der Wegaufnehmer (5) am Grundrahmen (3), also am nicht bewegten Teil der Vorrichtung, angeschlossen ist.

3. Vorrichtung nach einem der Ansprüche 1 oder 2, **dadurch gekennzeichnet, dass** der Kraftaufnehmer (6) einerseits an der der festen Probenaufnahme (1) zugewandten Stirnseite des Stellelements (4) und andererseits an der verfahrbaren Probenaufnahme (2) anliegt.

4. Vorrichtung nach Anspruch 3, **dadurch gekennzeichnet, dass** der Kraftaufnehmer (6) in der Art einer Kraftmessdose mit einem äußeren Ringelement (6.1) und einem zentralen inneren Druckelement (6.2) ausgebildet ist, wobei das äußere Ringelement (6.1) der Stirnseite des Stellelements (4) und das innere Druckelement (6.2) der verfahrbaren Probenaufnahme (2) anliegt und das äußere Ringelement (6.1) über Verformungsstege (6.3) mit dem inneren Druckelement (6.2) verbunden ist.

5. Vorrichtung nach Anspruch 3 oder 4, **dadurch gekennzeichnet, dass** in der Stirnseite des Stellelements (4) eine Aufnahmevertiefung (7) für das innere Druckelement (6.2) vorgesehen ist.

6. Vorrichtung nach einem der Ansprüche 1 bis 5, **dadurch gekennzeichnet, dass** der Wegaufnehmer (5) von einem koaxial an der verfahrbaren Probenaufnahme (2) angeordneten zylindrischen Messtaster (8) sowie einer am Grundrahmen (3) angeordneten Messhülse (9) gebildet ist, in die der Messtaster (8) eintaucht, wobei die Wegverschiebung zwischen Messtaster (8) und Messhülse (9) von einem Wegsensor (10) erfasst wird.

7. Vorrichtung nach Anspruch 6, **dadurch gekennzeichnet, dass** der Messtaster (8) einen feststehenden oder justierbaren, dem inneren Druckelement (6.2) auf der der Probenaufnahme (2) abgewandten Seite anliegenden Anschlagring (11) trägt.

8. Vorrichtung nach einem der Ansprüche 1 bis 7, die in Form eines Pinolen-Lastrahmens ausgebildet ist, **dadurch gekennzeichnet, dass** das verfahrbare Stellelement (4) von einer Pinole gebildet ist, die über eine Zahnstange durch einen Handhebel oder einen motorischen Antrieb über ein Ritzel (12) bewegt wird.

9. Vorrichtung nach einem der Ansprüche 1 bis 7, die in Form eines Säulengestells ausgebildet ist, **dadurch gekennzeichnet, dass** das verfahrbare Stellelement (4) von einer Fahrtraverse (13) gebildet ist, die auf zwei zylindrischen Säulen (14) verfahrbar angeordnet ist, wobei die beiden Säulen (14) durch eine obere und eine untere Festtraverse (15) miteinander verbunden sind.

10. Vorrichtung nach Anspruch 9, **dadurch gekennzeichnet, dass** der Wegaufnehmer (5) und der Kraftaufnehmer (6) fluchtend in einer Mittelachse des Säulengestells angeordnet sind.

11. Vorrichtung nach einem der Ansprüche 1 bis 10, **dadurch gekennzeichnet, dass** der Wegaufnehmer (5) als analoges oder digitales Wegmesssystem ausgebildet ist.

12. Verwendung einer Vorrichtung nach einem der vorhergehenden Ansprüche, **dadurch gekennzeichnet, dass** die Vorrichtung zur Durchführung von Druck- und Zugversuchen an Federn und elastischen Bauteilen, Baugruppen und Werkstoffproben konzipiert ist.

13. Verwendung nach Anspruch 12, **dadurch gekennzeichnet, dass** bei den Versuchten durch Einleitung einer Prüfkraft (F) in die auf den Kraftaufnehmer (6) montierte Probenaufnahme (2) eine Wegmessung (ΔL) mit einer Kompensation eines Wegmessfehlers um einen Betrag einer Eigenverformung eines Kraftaufnehmers (6) erfolgt.

## Claims

1. A device for performing component and material tests on samples having two sample retainers (1, 2) disposed so as to face each other between which a force for loading the sample disposed therebetween can be generated, wherein the one sample retainer (1) is fixedly disposed on a base frame (3), and the other sample retainer (2) is disposed on a movable positioning element (4), further comprising a travel sensor (5) detecting a travelling path of the sample retainer (2) as well as a force sensor (6) detecting the force applied to the sample and disposed on the movable positioning element (4), and a measuring sensor (8) of the travel sensor (5) connected to the movable part of the force sensor (6),
**characterised in that**
the measuring axis of the travel sensor (5) and the axis of the force vector of the force introduced to the sample via the force sensor are aligned with a distance to be measured by the travel sensor (5).

2. The device according to claim 1, **characterised in that** the travel sensor (5) is connected to the base frame (3), i.e. to the stationary part of the device.

3. The device according to one of the claims 1 or 2, **characterised in that** the force sensor (6) abuts on the face side of the positioning element (4) facing the fixed sample retainer (1) on the one hand, and on the movable sample retainer (2) on the other hand.

4. The device according to claim 3, **characterised in that** the force sensor (6) is formed in the fashion of a load cell having an outer ring element (6.1) and a central inner pressure element (6.2), wherein the outer ring element (6.1) abuts on the face side of the positioning element (4) and the inner pressure element (6.2) abuts on the movable sample retainer (2), and the outer ring element (6.1) is connected to the inner pressure element (6.2) through deformation bridges (6.3).

5. The device according to claim 3 or 4, **characterised in that** an accommodation recess (7) for the inner pressure element (6.2) is provided in the face side of the positioning element (4).

6. The device according to one of the claims 1 to 5, **characterised in that** the travel sensor (5) is formed by a cylindrical measuring sensor (8) coaxially disposed on the movable sample retainer (2) as well as a measuring sleeve (9) disposed on the base frame (3) into which the measuring sensor (8) immerses, wherein the displacement of the path between the measuring sensor (8) and the measuring sleeve (9) is detected by a path sensor 10.

7. The device according to claim 6, **characterised in that** the measuring sensor (8) carries a fixed or adjustable stop ring (11) abutting to the inner pressure element (6.2) on the side facing away from the sample retainer (2).

8. The device according to one of the claims 1 to 7 formed in the form of a quill load frame, **characterised in that** the movable positioning element (4) is formed by a quill moved by a hand lever through a rack or by a motor drive through a pinion (12).

9. The device according to one of the claims 1 to 7 formed in the form of a column frame, **characterised in that** the movable positioning element (4) is formed by a travel traverse (13) movably arranged on two cylindrical columns (14), the two columns (14) being connected to each other by an upper and a lower fixed traverse (15).

10. The device according to claim 9, **characterised in that** the travel sensor (5) and the force sensor (6) are disposed in a central axis of the column frame so as to be aligned.

11. The device according to one of the claims 1 to 10, **characterised in that** the travel sensor (5) is formed as an analogous or digital path measuring system.

12. Use of a device according to one of the preceding claims, **characterised in that** the device is designed for performing compression and tension tests on springs and elastic components, assemblies, and material samples.

13. The use according to claim 12, **characterised in that**, in the tests, a path measurement (ΔL) comprising a compensation of a path measurement error by an amount of a self-deformation of a force sensor (6) is performed by introducing a test force (F) into the sample retainer (2) mounted on the force sensor (6).

## Revendications

1. Dispositif pour l'exécution d'essais sur des composants et des matériaux sur des échantillons avec deux logements d'échantillon (1, 2) placés en face l'un de l'autre entre lesquels une force peut être produite pour charger l'échantillon placé entre eux, cependant que l'un des logements d'échantillon (1) est placé fixe sur un cadre de base (3) et l'autre logement d'échantillon (2) est placé sur un élément de réglage déplaçable (4), de plus avec un capteur de déplacement (5) qui saisit le trajet de déplacement du logement d'échantillon (2) ainsi qu'avec un capteur de force (6), qui saisit la force appliquée sur l'échantillon, qui est placé sur l'élément de réglage déplaçable (4), et avec un capteur de mesure (8) du capteur de déplacement (5) qui est relié à la partie mobile du capteur de force (6),
**caractérisé en ce que** l'axe de mesure du capteur de déplacement (5) et l'axe du vecteur de force de la force appliquée sur l'échantillon par le capteur de force sont alignés avec un trajet qui doit être mesuré par le capteur de déplacement (5).

2. Dispositif selon la revendication 1, **caractérisé en ce que** le capteur de déplacement (5) est raccordé sur le cadre de base (3) et donc sur la partie du dispositif qui n'est pas déplacée.

3. Dispositif selon l'une des revendications 1 ou 2, **caractérisé en ce que** le capteur de force (6) s'appuie d'une part sur le côté frontal tourné vers le logement d'échantillon fixe (1) de l'élément de réglage (4) et d'autre part sur le logement d'échantillon déplaçable (2).

4. Dispositif selon la revendication 3, **caractérisé en ce que** le capteur de force (6) est configuré à la manière d'un dynamomètre avec un élément annulaire extérieur (6.1) et d'un élément de pression intérieur central (6.2), cependant que l'élément annulaire extérieur (6.1) s'appuie sur le côté frontal de l'élément de réglage (4) et l'élément de pression intérieur (6.2) sur le logement d'échantillon déplaçable (2) et l'élément annulaire extérieur (6.1) est relié à l'élément de pression intérieur (6.2) par des entretoises de déformation (6.3).

5. Dispositif selon la revendication 3 ou 4, **caractérisé en ce qu'**il est prévu un renfoncement de logement (7) pour l'élément de pression intérieur (6.2) dans le côté frontal de l'élément déplaçable (4).

6. Dispositif selon l'une des revendications 1 à 5, **caractérisé en ce que** le capteur de déplacement (5) est formé par un capteur de mesure cylindrique (8) placé coaxialement sur le logement d'échantillon déplaçable (2) ainsi que par un manchon de mesure (9), placé sur le cadre de base (3), dans lequel le capteur de mesure (8) plonge, cependant que le déplacement de trajet entre le capteur de mesure (8) et le manchon de mesure (9) est saisi par un capteur de déplacement (10).

7. Dispositif selon la revendication 6, **caractérisé en ce que** le capteur de mesure (8) porte un anneau de butée (11) fixe ou ajustable, qui s'appuie sur l'élément de pression intérieur (6.2) sur le côté opposé au logement d'échantillon (2).

8. Dispositif selon l'une des revendications 1 à 7 qui est configuré en forme de cadre de charge à douille, **caractérisé en ce que** l'élément de réglage déplaçable (4) est formé par une douille qui est déplacé par un levier manuel au moyen d'une crémaillère ou par un entraînement motorisé au moyen d'un pignon (12).

9. Dispositif selon l'une des revendications 1 à 7 qui est configuré en forme de bâti à colonnes, **caractérisé en ce que** l'élément de réglage déplaçable (4) est formé par une traverse de déplacement (13) qui est placée déplaçable sur deux colonnes cylindriques (14), cependant que les deux colonnes (14) sont reliées l'une à l'autre par une traverse fixe supérieure et une traverse fixe inférieure (15).

10. Dispositif selon la revendication 9, **caractérisé en ce que** le capteur de déplacement (5) et le capteur de force (6) sont placés alignés dans un axe central du bâti à colonnes.

11. Dispositif selon l'une des revendications 1 à 10, **caractérisé en ce que** le capteur de déplacement (5) est configuré comme un système de mesure de déplacement analogique ou numérique.

12. Utilisation d'un dispositif selon l'une des revendications précédentes, **caractérisé en ce que** le dispositif est conçu pour l'exécution d'essais de pression et de traction sur des ressorts et des composants élastiques, des modules et des échantillons de matériaux.

13. Utilisation selon la revendication 12, **caractérisé en ce qu'**une mesure de déplacement (ΔL) avec une compensation d'une erreur de mesure de déplacement d'une valeur d'une déformation propre d'un capteur de force (6) est effectuée lors des essais par introduction d'une force d'essai (F) dans le logement d'échantillon (2) monté sur le capteur de force (6).
